# EUROPEAN PATENT APPLICATION

(11) **EP 3 176 740 A1**
(43) Date of publication of application: **07.06.2017**
(21) Application number: 16201199.3
(22) Date of filing: 29.11.2016
(51) Int. Cl.: G06Q 20/10, G06Q 20/32

(54) **INFORMATION PROCESSING METHOD AND APPARATUS, COMPUTER PROGRAM AND RECORDING MEDIUM**

(30) Priority: 01.12.2015 CN 201510866549
(71) Applicant: Xiaomi Inc., Beijing 100085 (CN)
(72) Inventor: WANG, Qian, Beijing 100085 (CN); ZHU, Yin, Beijing 100085 (CN); HAO, Shaohua, Beijing 100085 (CN)
(74) Representative: Hughes, Andrea Michelle

(57) **Abstract**

The present invention relates to an information processing method and an information processing apparatus, a computer program and a recording medium, which pertain to the field of computer technologies. The method comprises: receiving information input by a user on a display interface of a calculator application, and generating payment information according to the information input on the display interface. The payment information may be generated on the interface of the calculator application, so that the user can perform payment with the calculator application directly according to the displayed payment information and thus the functionality of the calculator application is expanded.

## Description

### TECHNICAL FIELD

The present invention relates to the field of computer technologies, and more particularly, to an information processing method and apparatus, a computer program and a recording medium.

### BACKGROUND

With the development of terminal technologies, a user may perform various operations, such as sending short messages, calculating, paying and transferring money using various application programs installed on a terminal. This brings great convenience to life of users. As a common tool for users' daily calculation tasks, the calculator application is widely used. Currently, the calculator application is just used for calculation and is thus rather limited in functionality.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Embodiments of the present invention provide an information processing method and apparatus, a computer program and a recording medium as follows.

According to a first aspect of the embodiments of the present invention, there is provided an information processing method, which is used for a terminal and comprises:
receiving information input by a user on a display interface of a calculator application; and
generating payment information according to the information input on the display interface.

Optionally, generating the payment information according to the information input on the display interface comprises:
generating two-dimensional code payment information according to the information input on the display interface.

Optionally, generating the payment information according to the information input on the display interface comprises:
determining whether the terminal has a payment application installed thereon;
when the terminal has the payment application installed thereon, displaying an identifier of the payment application on the display interface; and
prompting the user whether to use the payment application.

Optionally, prior to prompting the user whether to use the payment application, the method further comprises:
when the information input by the user is a calculation formula, invoking the payment application in the terminal, passing a calculation result of the calculation formula into the payment application, and processing the calculation result by the payment application; and
when the information input by the user is a figure, invoking the payment application in the terminal, passing the figure into the payment application, and processing the figure by the payment application.

Optionally, prompting the user whether to use the payment application comprises: prompting the user whether to use the payment application to perform money transfer or payment according to the calculation result or the figure.

Optionally, the method further comprises:
when the user selects to use the payment application to perform the money transfer or the payment according to the calculation result or the figure, invoking the payment application,
and prompting the user to select a target for the money transfer or the payment to complete the money transfer or the payment.

According to a second aspect of the embodiments of the present invention, there is provided an information processing apparatus, which is used for a terminal and comprises:
an information receiving module configured to receive information input by a user on a display interface of a calculator application; and
an information processing module configured to generate payment information according to the information input on the display interface.

Optionally, the information processing module is configured to generate two-dimensional code information according to the information input on the display interface.

Optionally, the information processing module comprises:
a judgment sub-module configured to determine whether the terminal has a payment application installed thereon; and
an information prompt sub-module configured to, when the terminal has the payment application installed thereon, display an identifier of the payment application on the display interface and prompt the user whether to use the payment application.

Optionally, the apparatus further comprises:
an application invoking module configured to, when the information input by the user is a calculation formula, invoke the payment application in the terminal and pass a calculation result of the calculation formula into the payment application, by which the calculation result is processed; and when the information input by the user is a figure, invoke the payment application in the terminal and pass the figure into the payment application, by which the figure is processed.

Optionally, the information prompt sub-module is configured to prompt the user whether to use the payment application to perform money transfer or payment according to the calculation result or the figure.

Optionally, the apparatus further comprises:
a money transfer/payment module configured to, when the user selects to use the payment application to perform money transfer or payment according to the calculation result or the figure, invoke the payment application and prompt the user to select a target for the money transfer or the payment to complete the money transfer or the payment.

According to a third aspect of the embodiments of the present invention, there is provided an information processing apparatus, which comprises:
a processor;
a memory configured to store instructions executable by a processor;
wherein the processor is configured to:
receive the information input by a user on the display interface of a calculator application; and
generate payment information according to the information input on the display interface.

In one particular embodiment, the steps of the information processing method are determined by computer program instructions.

Consequently, according to a fourth aspect, the invention is also directed to a computer program for executing the steps of an information processing method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present invention may have the following beneficial effects:
The technical solutions involve receiving information input by the user on the display interface of calculator application and generating payment information according to the information input on the display interface. The payment information may be generated on the interface of the calculator application, so that the user can perform payment with the calculator application directly according to the displayed payment information and thus functionality of the calculator application is expanded.

It is to be understood that both the foregoing general description and the following detailed description are exemplary and explanatory only and are not restrictive of the present invention.

### BRIEF DESCRIPTION OF THE DRAWINGS

The accompanying drawings here, which are incorporated in and constitute a part of this specification, illustrate embodiments consistent with the present invention and, together with the description, serve to explain the principles of the present invention.
Fig. 1 is a flow chart showing an information processing method according to an exemplary embodiment;
Fig. 2 is a flow chart showing an information processing method according to another exemplary embodiment;
Fig. 3 is a block diagram showing an information processing apparatus according to an exemplary embodiment;
Fig. 4 is a block diagram showing an information processing apparatus according to another exemplary embodiment;
Fig. 5 is a block diagram showing an information processing apparatus according to another exemplary embodiment; and
Fig. 6 is a block diagram showing an information processing apparatus according to an exemplary embodiment.

Explicit embodiments of the present invention that have been illustrated in the above accompany drawings will be described in more detail hereinafter. These accompany drawings and literal description are by no means intended to limit the scope of the idea of the present invention, but to explain the concept of the present invention to those skilled in the art with reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the present invention. Instead, they are merely examples of apparatuses and methods consistent with aspects related to the invention as recited in the appended claims.

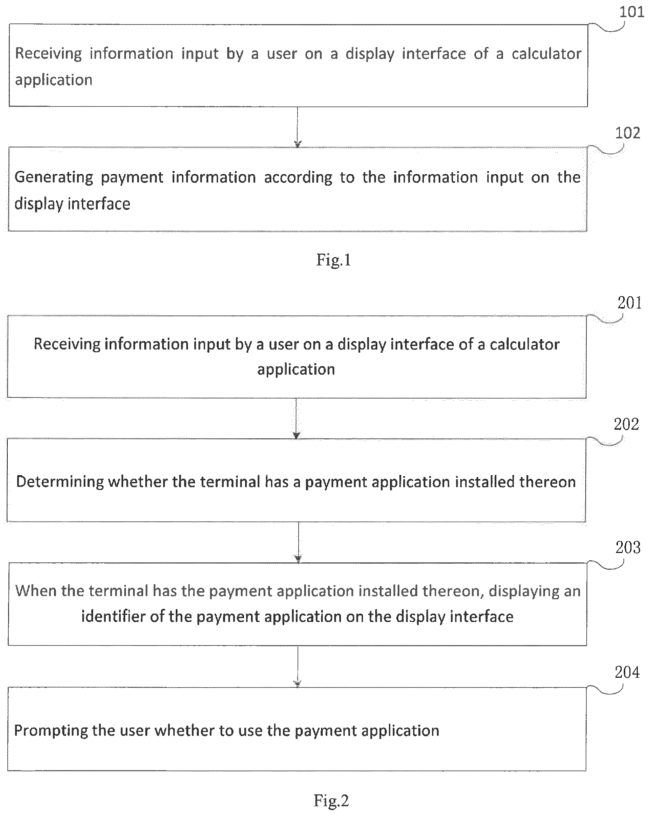

Fig. 1 is a flow chart showing an information processing method according to an exemplary embodiment, the embodiment is illustrated by taking an example where the information processing method is applied to terminals, such as a mobile phone, a tablet computer or a smart television. Referring to Fig. 1, the information processing method may comprise the following several steps.

S101: information input by a user on a display interface of calculator application is received. S102: payment information is generated according to the information input on the display interface.

The technical solution involves receiving information input by a user on the display interface of calculator application and generating payment information according to the information input on the display interface. The payment information may be generated on the interface of the calculator application, so that the user can perform payment with the calculator application directly according to the displayed payment information and thus the functionality of the calculator application is expanded.

In one embodiment, generating payment information according to the information input on the display interface may comprise: generating two-dimensional code payment information according to the information input on the display interface.

For example, two-dimensional code payment information may be generated according to a figure input on the computer application or a calculation result obtained by calculation, and the generated two-dimensional code information is displayed at a preset position on the display interface, so that another user can perform payment by scanning the two-dimensional code payment information using a payment application.

In another embodiment, generating payment information according to the information input on the display interface may comprise:
determining whether the terminal has a payment application installed thereon; and
when the terminal has the payment application installed thereon, displaying an identifier of the payment application on the display interface; and
prompting the user whether to use the payment application.

The technical solution involves receiving the information input on the display interface of the calculator application; determining whether the terminal has a payment application installed thereon; and when the terminal has the payment application installed thereon, displaying an identifier of the payment application on the display interface. As such, the user can invoke the payment application with the calculator application directly according to the displayed identifier of the payment application to perform the payment, and thus the functionality of the calculator application is expanded.

Fig. 2 is a flow chart showing an information processing method according to another exemplary embodiment. The embodiment is illustrated by taking an example where the information processing method is applied to a terminal, such as a mobile phone, a tablet computer or a smart television. Referring to Fig. 2, the information processing method may comprise the following several steps.
S201: information input by a user on a display interface of calculator application is received.
S202: it is determined whether the terminal has a payment application installed thereon.
S203: when the terminal has the payment application installed thereon, an identifier of the payment application is displayed on the display interface.
S204: the user is prompted whether to use the payment application.

In the technical solution, prior to prompting the user whether to use the payment application, the method further comprises:
when the information input by the user is a calculation formula, invoking the payment application in the terminal, passing the calculation result of the calculation formula into the payment application, and processing the calculation result by the payment application; and
when the information input by the user is a figure, invoking the payment application in the terminal, passing the figure into the payment application, and processing the figure by the payment application.

Optionally, prompting the user whether to use the payment application comprises: prompting the user whether to use the payment application to perform money transfer or payment according to the calculation result or the figure.

Optionally, the method further comprises:
when the user selects to use the payment application to perform the money transfer or the payment, invoking the payment application, and prompting the user to select a target for the money transfer or the payment to complete the money transfer or the payment.

The technical solution opens up an interface between the calculator application and a payment application in case the payment application is installed locally on the terminal. When the user performs calculation with or inputs a figure into the calculator application, an identifier (e.g., an icon) of the payment application will be displayed on the input interface of the calculator application to prompt the user whether to transfer a corresponding amount of money. As such, the payment function, besides the calculation function, can be implemented by the calculator application, and thus the functionality of the calculator application is expanded.

In the following, the implementation of the foregoing technical solution in Fig. 2 will be described in detail in conjunction with a specific application scenario.

For example, supposing the user inputs a calculation formula "120/3" in the interface of the calculator application. In addition to calculating a result as "40" and displaying the calculated result on its interface, the calculator application will judge whether the terminal has downloaded a payment application. If the payment application is installed locally on the terminal, an identifier of the payment application will be displayed on the input interface of the calculator application so that the user can select and use the payment application, or the user will be prompted whether to perform money transfer in an amount of "40". If the user selects to perform the money transfer, he/she will enter an interface for going through the payment process from the current input interface of the calculator application and be prompted to select a target for the money transfer to complete the money transfer.

In summary, the technical solution involves: receiving the information input by the user on the display interface of the calculator application; determining whether the terminal has the payment application installed thereon; and when the terminal has the payment application installed thereon, displaying the identifier of the payment application on the display interface. As such, the user can invoke the payment application with the calculator application directly according to the displayed identifier of the payment application to perform the payment, and thus the functionality of the calculator application is expanded.

The following are apparatus embodiments of the present invention, which may be configured to perform the method embodiments of the present invention. For details that are not disclosed in the apparatus embodiments of the present invention, reference can be made to the method embodiments of the present invention.

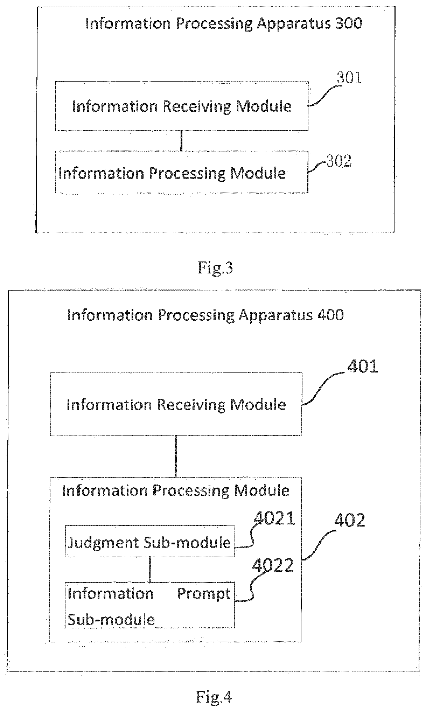

Fig. 3 is a block diagram showing an information processing apparatus 300 according to an exemplary embodiment. The information processing apparatus 300 may be implemented by software, hardware or a combination thereof as a terminal or a part of it. The terminal is a mobile phone, a tablet computer or a smart television. The information processing apparatus 300 may comprise:
an information receiving module 301 which may be configured to receive information input by a user on a display interface of a calculator application; and
an information processing module 302 which may be configured to generate payment information according to the information input on the display interface.

Optionally, the information processing module 302 may be specifically configured to generate two-dimensional code payment information according to the information input on the display interface.

The technical solution involves receiving the information input by the user on the display interface of the calculator application and generating payment information according to the information input on the display interface. The payment information may be generated on the interface of the calculator application, so that the user can perform payment with the calculator application directly according to the displayed payment information and thus the functionality of the calculator application is expanded.

Fig. 4 is a block diagram showing an information processing apparatus 400 according to another exemplary embodiment. The information processing apparatus 400 may be implemented by software, hardware or a combination thereof as a terminal or a part of it. The terminal is a mobile phone, a tablet computer or a smart television. The information processing apparatus 400 may comprise:
an information receiving module 401 which may be configured to receive information input by a user on a display interface of a calculator application; and
an information processing module 402 which may be configured to generate payment information according to the information input on the display interface.

Optionally, the information processing module 402 may comprise:
a judgment sub-module 4021 which may be configured to determine whether the terminal has a payment application installed thereon; and
an information prompt sub-module 4022 which may be configured to, when the terminal has the payment application installed thereon, display an identifier of the payment application on the display interface and prompt the user whether to use the payment application.

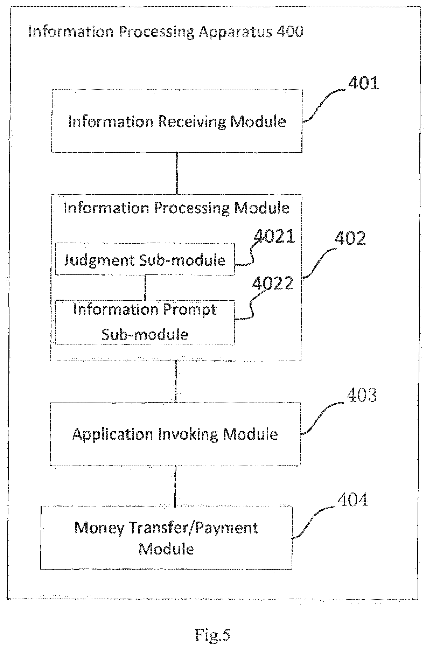

Referring to Fig. 5, the information processing apparatus 400 as shown in Fig. 4 may further comprise:
an application invoking module 403 configured to, when the information input by the user is a calculation formula, invoke the payment application in the terminal and pass the calculation result of the calculation formula into the payment application, by which the calculation result is processed; and when the information input by the user is a figure, invoke the payment application in the terminal and pass the figure into the payment application, by which the figure is processed.

Optionally, the information prompt sub-module 4022 is configured to prompt the user whether to use the payment application to perform money transfer or payment according to the calculation result or the figure.

Referring to Fig. 5, when the information prompt sub-module 4022 is configured to prompt the user whether to use the payment application to perform money transfer or payment according to the calculation result or the figure, the information processing apparatus 400 may further comprise a money transfer/payment module 404.

Optionally, the money transfer/payment module 404 may be configured to, when the user selects to use the payment application to perform the money transfer or the payment according to the calculation result or the figure, invoke the payment application and prompt the user to select a target for the money transfer or the payment to complete the money transfer or the payment.

The technical solution opens up an interface between the calculator application and the payment application in case the payment application is installed locally on the terminal. When the user performs calculation with or inputs a figure in the calculator application, an identifier (e.g., an icon) of the payment application will be displayed in the input interface of the calculator application to prompt the user whether to transfer a corresponding amount of money. As such, the payment function, besides the calculation function, may be implemented by the calculator application, and thus the functionality of the calculator application is expanded.

In summary, the technical solution involves: receiving information input by the user on the display interface of the calculator application, and generating payment information according to the information input on the display interface. The payment information may be generated on the interface of the calculator application, so that the user can perform payment with the calculator application directly according to the displayed payment information, and thus the functionality of the calculator application is expanded.

In the above apparatus according to the embodiments, specific implementing manners of all the modules have been described in the embodiments of the related method, which will not be described repeatedly herein.

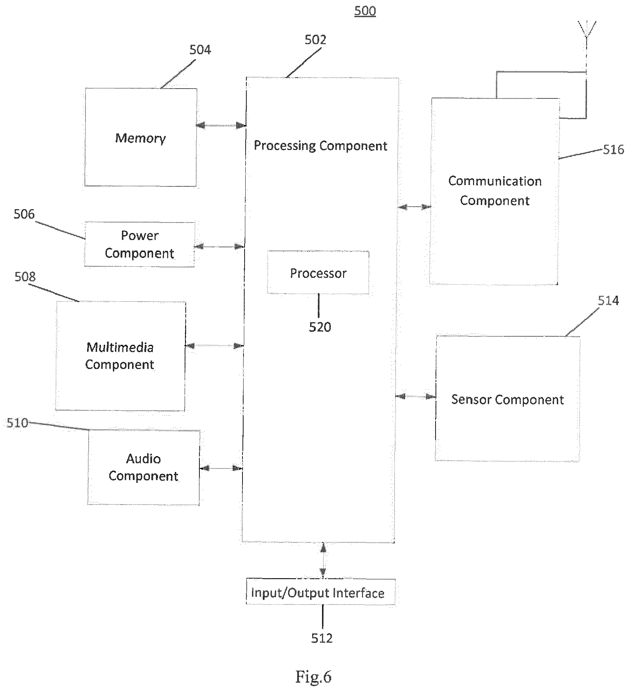

Fig. 6 is referred to show a block diagram of an information processing apparatus 500 in an exemplary embodiment. For example, the apparatus 500 may be terminal equipment, such as a mobile phone, a tablet computer and a smart television.

Refering to Fig. 6, the apparatus 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the apparatus 500. Examples of such data include instructions for any applications or methods operated on the apparatus 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk. The power component 506 provides power to various components of the apparatus 500. The power component 506 may include a power management system, one or more power sources, and any other components associated with the generation, management, and distribution of power in the apparatus 500.

The multimedia component 508 includes a screen providing an output interface between the apparatus 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the apparatus 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the apparatus 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the apparatus 500. For instance, the sensor component 514 may detect an open/closed status of the apparatus 500, relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the apparatus 500 and other devices. The apparatus 500 may access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 520 in the apparatus 500, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium is provided, and when instructions in the storage medium are executed by a processor of an apparatus 500, the apparatus 500 is enabled to perform the above-described information processing method.

It will be appreciated that the present invention is not limited to the exact construction that has been described above and illustrated in the accompanying drawings, and that various modifications and changes may be made without departing from the scope thereof. It is intended that the scope of the invention only be limited by the appended claims.

## Claims

1. An information processing method, **characterized in that** the method is used for a terminal and comprises:
receiving information input by a user on a display interface of a calculator application; and
generating payment information according to the information input on the display interface.

2. The method according to claim 1, **characterized in that** generating the payment information according to the information input on the display interface comprises:
generating two-dimensional code payment information according to the information input on the display interface.

3. The method according to claim 1 or 2, **characterized in that** generating the payment information according to the information input on the display interface comprises:
determining whether the terminal has a payment application installed thereon;
displaying an identifier of the payment application on the display interface, when the terminal has the payment application installed thereon; and
prompting the user whether to use the payment application.

4. The method according to claim 3, **characterized by**, prior to prompting the user whether to use the payment application, further comprising:
when the information input by the user is a calculation formula, invoking the payment application in the terminal, passing a calculation result of the calculation formula into the payment application, and processing the calculation result by the payment application; and
when the information input by the user is a figure, invoking the payment application in the terminal, passing the figure into the payment application, and processing the figure by the payment application.

5. The method according to claim 4, **characterized in that** prompting the user whether to use the payment application comprises:
prompting the user whether to use the payment application to perform money transfer or payment according to the calculation result or the figure.

6. The method according to claim 5, **characterized by** further comprising:
when the user selects to use the payment application to perform the money transfer or the payment according to the calculation result or the figure, invoking the payment application, and prompting the user to select a target for the money transfer or the payment to complete the money transfer or the payment.

7. An information processing apparatus, **characterized in that** the apparatus is used for a terminal and comprises:
an information receiving module (301) configured to receive information input by a user on a display interface of a calculator application; and
an information processing module (302) configured to generate payment information according to the information input on the display interface.

8. The apparatus according to claim 7, **characterized in that** the information processing module is configured to generate two-dimensional code payment information according to the information input on the display interface.

9. The apparatus according to claim 7 or 8, **characterized in that** the information processing module comprises:
a judgment sub-module (4021) configured to determine whether the terminal has a payment application installed thereon; and
an information prompt sub-module (4022) configured to, when the terminal has the payment application installed thereon, display an identifier of the payment application on the display interface, and prompt the user whether to use the payment application.

10. The apparatus according to claim 9, **characterized by** further comprising:
an application invoking module (403) configured to
when the information input by the user is a calculation formula, invoke the payment application in the terminal, and pass a calculation result of the calculation formula into the payment application, by which the calculation result is processed; and
when the information input by the user is a figure, invoke the payment application in the terminal, and pass the figure into the payment application, by which the figure is processed.

11. The apparatus according to claim 10, **characterized in that** the information prompt sub-module is configured to prompt the user whether to use the payment application to perform money transfer or payment according to the calculation result or the figure.

12. The apparatus according to claim 11, **characterized by** further comprising:
a money transfer/payment module (404) configured to, when the user selects to use the payment application to perform money transfer or payment according to the calculation result or the figure, invoke the payment application, and prompt the user to select a target for the money transfer or the payment to complete the money transfer or the payment.

13. An information processing apparatus, **characterized by** comprising:
a processor (502);
a memory (504) configured to store instructions executable by the processor;
wherein the processor is configured to:
receive information input by a user on a display interface of a calculator application;
and
generate payment information according to the information input on the display interface.

14. A computer program including instructions for executing the steps of an information processing method according to any one of claims 1 to 6 when said program is executed by a computer.

15. A recording medium readable by a computer and having recorded thereon a computer program including instructions for executing the steps of an information processing method according to any one of claims 1 to 6.
